# EUROPÄISCHE PATENTSCHRIFT

(11) **EP 0 677 742 B1**
(45) Veröffentlichungstag und Bekanntmachung des Hinweises auf die Patenterteilung: **06.10.2004**
(21) Anmeldenummer: 95105254.7
(22) Anmeldetag: 07.04.1995
(51) Int. Cl.: G01N 29/24, G01N 27/90

(54) **Vorrichtung und Verfahren zur Erfassung der Prüfkopfabhebung bei der zerstörungsfreien Untersuchung von metallischen Werkstoffen mit elektromagnetischen Ultraschallwandlern**
Apparatus and method for measuring the lift-off of a measuring head during the non-destructive testing of metal pieces with electromagnetic ultrasonic transducers
Dispositif et procédé pour déterminer la distance de séparation d'une tête de mesure pendant le contrôle non-destructif de pièces métalliques par des transducteurs ultrasonores électromagnétiques

(30) Priorität: 14.04.1994 DE 4412808; 30.05.1994 DE 4418822
(43) Veröffentlichungstag der Anmeldung: 18.10.1995
(73) Patentinhaber: Fraunhofer-Gesellschaft zur Förderung der angewandten Forschung e.V., 80686 München (DE)
(72) Erfinder: Salzburger, Hans-Jürgen, Dr. Dipl.-Phys., D-66539 Neunkirchen (DE); Hübschen, Gerhard, Dr., D-66740 Saarlouis (DE); Kröning, Michael, Prof. Dr., D-66123 Saarbrücken (DE); Pitkänen, Jorma, F-02280 Espoo (FI)
(74) Vertreter: Gagel, Roland, Dr.

(56) Entgegenhaltungen:
- EP-A- 0 440 317
- EP-A- 0 532 142
- GB-A- 2 045 932
- US-A- 4 777 824
- NON-DESTRUCTIVE TESTING ROC. OF THE 4TH EUROP. CONF.LONDON,UK, Bd. 4, 13.September 1987 - 17.September 1987 Seiten 2321-2327, H.J.SALZBURG 'A new design of the RF-part of electromagnetic-ultrasonic transducers.'
- SOVIET JOURNAL OF NONDESTRUCTIVE TESTING, Bd. 26, 1990 Seiten 242-246, XP 000200491 V.K.ZHUKOV ET AL. 'Elimination of the effect of the gap between transducer and object of inspection on the intensity of formed signals.'

## Beschreibung

Die Erfindung betrifft eine Vorrichtung und ein Verfahren zur Erfassung der Prüfkopfabhebung bei der zerstörungsfreien Untersuchung von metallischen Werkstoffen mit Hilfe eines koppelmittelfreien elektromagnetischen Ultraschallsensors mit mindestens einem elektromagnetischen Ultraschallwandler, mit dem oder mit denen eine Ultraschallwelle ohne Koppelmittel erzeugbar und empfangbar ist.

Beispielsweise sind aus der DE C1 42 04 643 und aus der US A 4 777 824 solche Vorrichtungen bekannt.

Aus dem Stand der Technik sind eine Reihe von koppelmittelfreien elektromagnetischen Ultraschall-Sensoren bekannt, bei denen ein magnetisches Hochfrequenzfeld innerhalb der elektromagnetischen Skintiefe eines leitfähigen Materials mit einem statischen oder niederfrequenten Magnetfeld überlagert wird. Das magnetische Hochfrequenzfeld wird von einer Spule erzeugt, die möglichst nahe an der Oberfläche des leitfähigen Materials angeordnet wird. Deren elektromagnetisches Feld erzeugt innerhalb der Skintiefe ein Wirbelstromfeld, das dann von dem äußeren magnetischen Gleich- oder niederfrequenten Wechselfeld überlagert wird.

Die Verfälschung der erhaltenen Ergebnisse durch ein Abheben der Meßspule des UItraschallwandlers vom Prüfkörper ist im Stand der Technik schon erkannt, jedoch nie wirksam beseitigt worden.

In dem Artikel "New Design of the RF-Part of Electromagnetic-Ultrasonic (EMUS-) Transducers" von H.J. Salzburger in Nondestructive Testing Proc. of the 4th European Conference, Vol. 4, Oxford Pergamon Press, 1988, S. 2321 - 2327 wird vorgeschlagen, ein hoch-permeables schlecht leitendes Material als Abstandshalter zu verwenden, wodurch gleichzeitig der Abstand der empfindlichen Spulen von der Prüflingsoberfläche größer wird und der effektive Luftweg zwischen Spule und Prüflingsoberfläche kleiner wird. Hiermit kann eine Verlängerung der Lebensdauer der Wicklungen erreicht werden, weil keine Oberflächenreibung zwischen Spule und Prüfling auftreten kann. Eine Kompensation des Abhebeeffektes liegt jedoch nicht vor.

Schließlich haben V.K. Zhukov und N.V. Surkova in ihrem Artikel "Elimination of the effect of the gap between transducer and object of inspection on the intensity of formed signals" in Soviet Journal of Nondestructive Testing, Vol. 26 S. 242 - 246 (1990) drei Möglichkeiten zur Vermeidung bzw. zur Berücksichtigung des Abhebeeffektes vorgeschlagen.

Zum einen kann das empfangene Signal geregelt werden, denn eine durch die Spulenabhebung gegebene Impedanzänderung verursacht eine Änderung des in den Wicklungen erregten Stromes. Dieser Änderung der Stromamplitude, die einem Spannungsabfall über einen Widerstand entspricht, kann in einer Korrekturschaltung entgegengewirkt werden.

Als zweite Alternative schlagen V.K. Zhukov und N.V. Surkova einen Resonanzkreis auf der Empfangsseite vor. Bei einer wachsenden Abhebung der Spule von dem Prüfling wächst die Resonanzfrequenz, so daß diese Veränderung als Maß für die Abhebung genutzt werden kann.

Eine dritte Möglichkeit wird darin gesehen, daß zwei Messungen mit zwei nebeneinander angeordneten Spulen gemacht werden. Die beiden Spulen in einem Abstand von 4 - 6 Millimeter liefern zwei Empfangssignale, deren Differenz erfaßt wird. Da der Abstand der beiden Spulen klein ist, deutet eine Differenz auf einen kleinen Fehler in der Oberfläche hin und ist kein Hinweis auf den Abhebungseffekt. Eine mögliche Abhebung kann so allerdings nicht entdeckt oder kompensiert werden und auch größere Materialfehler oder Fehler, die sich in der Translationsbewegung des Prüflings erstrecken, sind nicht erfaßbar.

Der Nachteil einer nicht kontrollierten Abhebung liegt insbesondere in zwei Punkten begründet. Das durch das elektronische Rauschen der Elektronik begrenzte empfangene Signal wird in seiner Amplitude reduziert, da nicht die volle mögliche Leistung in die Probe eingekoppelt wird. Dadurch wird die Prüfempfindlichkeit vermindert und eine auf absolute Echoamplituden basierende Prüfaussage erschwert. Darüberhinaus kann dies zu einer zu starken Erwärmung des Sensors führen, was in kritischen Fällen zu einer Notabschaltung der gesamten Prüfanlage führen muß.

Eine Wirbelstromprüfung elektrisch leitfähiger Werkstoffe erfolgt über die Messung der Impedanz einer HF-Spule. Die Impedanz einer solchen Spule verändert sich beim Vorhandensein von Fehlstellen, da die induzierten Wirbelstrombahnen gestört werden. Allerdings beeinflussen auch der Abstand der HF-Spule von dem Prüfkörper, die Änderung der Leitfähigkeit oder die Änderung der Permeabilität des Werkstoffes die Impedanz der Spule und verfälschen das Meßergebnis.

Ausgehend von diesem Stand der Technik liegt der Erfindung die Aufgabe zugrunde, eine Vorrichtung der eingangs genannten Art anzugeben, bei der die Abhebung, also der Abstand des Ultraschallwandlers von der Werkstoffoberfläche, absolut gemessen, dokumentiert und bei geringen Abständen kompensiert werden kann.

Diese Aufgabe wird erfindungsgemäß mit einer Vorrichtung gemäß dem Oberbegriff des Anspruchs 1 dadurch gelöst, daß mindestens eine Wirbelstromspule senkrecht zur Ebene des elektromagnetischen Ultraschallwandlers angeordnet ist, die in Meßpausen des Ultraschallwandlers mit einer Sende- und Empfangsschaltung für die Wirbelstromspule zur Erfassung der komplexen Impedanz der Wirbelstromspule verbunden ist.

Dabei kann vorzugsweise eine Spulenwicklung in oder nahe der Ebene des Ultraschallwandlers liegen.

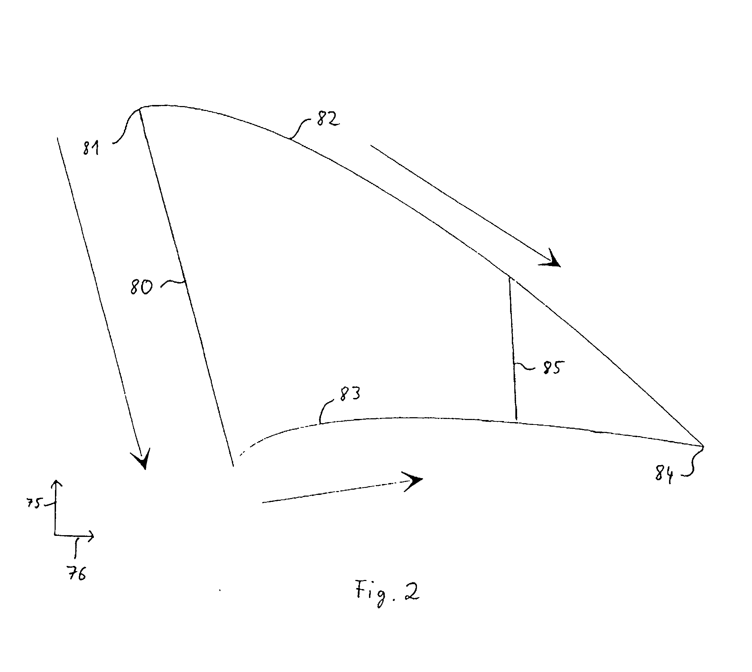

Dadurch, daß eine oder mehrere Wirbelstromspulen in Meßpausen des Ultraschallwandlers eine Wirbelstromprüfung durchführen, kann die Änderung der komplexen Impedanz der wechselstrom-gespeisten Spule gemessen und in den absoluten Abstand der Spule von der Prüflingsoberfläche umgerechnet werden. Zusätzlich wird bekanntlich bei der Wirbelstrommessung auch eine Änderung der Materialzusammensetzung erfaßt. Durch Auswertung der Phasenlage und des Betrages des Wirbelstromsignals in der komplexen Impedanzebene ist gewährleistet, daß z.B. an austenitischen Schweißnähten vorkommende Änderungen des Ferritgehaltes von der Elektronik nicht als Abhebung gedeutet werden kann. Mit einer festfrequenten Wirbelstrommessung wird mit der notwendigen lokalen Auflösung die Impedanzlage des Wirbelstromsignals in Abhängigkeit von der Materialzusammensetzung der Probe festgelegt. Über die Auswertung von Phase und Betrag des Wirbelstromsignals werden Abhebeeinfluß und Materialeinfluß separiert, wie dies in Fig. 2 dargestellt ist.

Mit Hilfe der Erfindung ist demnach eine technische Lehre zur absoluten Abstandsmessung mit Wirbelstrom bei unterschiedlichen und nicht bekannten Werkstoffparametern, wie z.B. der Überlagerungspermeabilität, gegeben.

Die Kompensation der Abhebeverluste des Ultraschallprüfkopfes über die Wirbelstrom-Abstandsmessung ist ein neuer Gedanke, der aus dem Stand der Technik nicht bekannt ist.

Diese Aufgabe wird weiterhin erfindungsgemäß mit einem Verfahren zur Erfassung der Prüfkopfabhebung bei der zerstörungsfreien Untersuchung von metallischen Werkstoffen mit elektromagnetischen Ultraschallwandlern, bei dem Ultraschall mit Hilfe von mindestens einem elektromagnetischen Ultraschallwandler in den Werkstoff eingestrahlt wird und mit Hilfe von mindestens einem elektromagnetischen Ultraschallwandler ein Ultraschallecho aufgenommen wird, dadurch gelöst, daß in Meßpausen der elektromagnetischen Ultraschallwandler ein Wirbelstromsignal in den metallischen Werkstoff eingespeist und empfangen wird, wobei mit Hilfe von Kalibrier-Impedanz-Ortskurven der Werkstoffzustand und der Abstand der Spule von der Werkstoffoberfläche ermittelt wird.

Amplituden und Phasenänderungen der gesendeten und der empfangenen Ultraschallwelle werden mit Hilfe des gemessenen Werkstoffzustandes und des Abstandes der Spule von der Werkstoffoberfläche kompensiert.

Weitere vorteilhafte Ausgestaltungen der Erfindung sind in den Unteransprüchen gekennzeichnet.

Nachfolgend werden Ausführungsbeispiele der Erfindung anhand der Zeichnungen bespielhaft näher erläutert. Diese zeigen:
- Fig. 1: eine Unteransicht auf einen Ultraschall-Sensor gemäß mehreren in diese Figur eingezeichneten Ausführungsbeispielen der Erfindung,
- Fig. 2: eine Impedanz-Ortskurve des Wirbelstromsignals bei Änderung der Abhebung und der Materialeigenschaften, und
- Fig. 3a: eine schematische Darstellung eines Ultraschall-Sensors zusammen mit der Sende- und Empfangselektronik der einzelnen Komponenten, und
- Fig.3b: eine Seitenansicht des Ultraschallsensors 2, wie er insbesondere aus der DE C1 42 04 643 der Anmelderin bekannt ist und dort sehr ausführlich beschrieben ist. Auf die Ausführungen zur Bauweise und Herstellung wird deshalb ausdrücklich verwiesen.

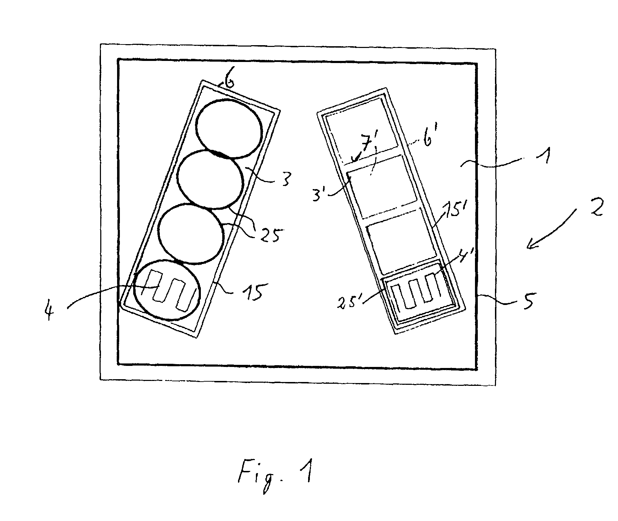

Die Fig. 1 zeigt eine Unteransicht auf einen Ultraschall-Sensor gemäß mehreren, in die Fig. 1 integrierten Ausführungsbeispielen der Erfindung. Die mit dem Bezugszeichen 1 bezeichnete Fläche bildet die plane Unterseite eines Ultraschall-Sensors 2, wobei eine Schutzschicht gegen Verschleiß vorzugsweise auf diese Fläche aufgebracht sein kann.

Der Ultraschall-Sensor 2 liegt bei Messungen mit seiner planen Unterseite auf einer Prüflingsoberfläche auf bzw. ist in unmittelbarer Nähe zu dieser angeordnet. Bei der Messung an Oberflächen von Rohren kann die Unterseite des Ultraschall-Sensors 2 auch dem Rohr angepaßt gekrümmt sein. Dabei ist diese Unterseite dann aber auch in jedem Punkt ihrer Oberfläche parallel oder ungefähr parallel zu der Rohroberfläche ausgerichtet.

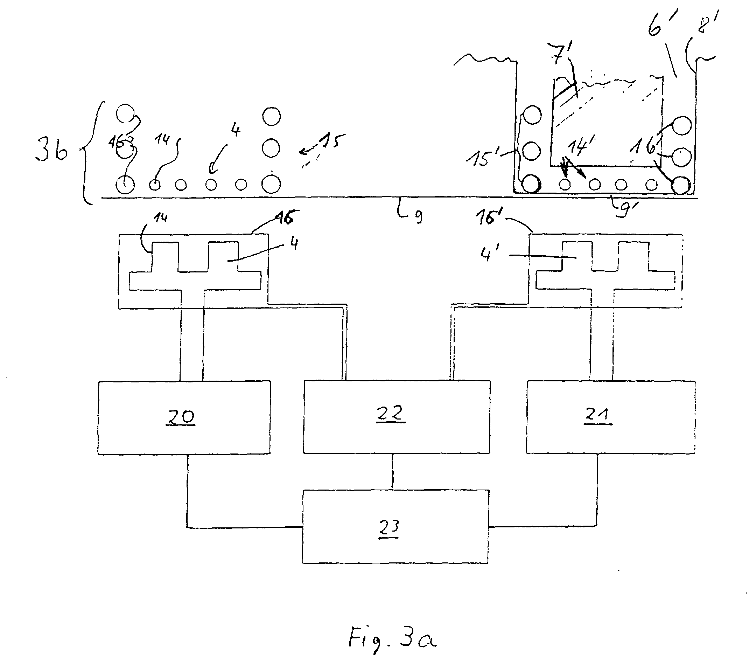

Dieser Ultraschall-Sensor 2 verfügt beispielsweise über zwei in einem Winkel zueinander angeordnete Ausnehmungen 6, 6' in dem Sensorblock 2 aus beispielsweise Polyurethan mit darin befindlichen Reihen 3 und 3' von elektromagnetischen Ultraschallwandlern 4 bzw. 4', die vorteilhafterweise aus mäanderförmig ausgestalteten Lagen von Spulenwicklungen aufgebaut sind, und nicht wie im linken Teil der Figur 1 dargestellt rund, sondern wie in Figur 3a
angedeutet bzw. in der DE C1 42 04 643 in Figur 6 mit der Ziffer 17 bezeichnet, mäanderförmig. Im rechten Teil von Figur 1 sind die Permanentmagnete 7' dargestellt, auf denen dann die mäanderförmigen Ultraschallwandler 4, 4' zu liegen kommen, wobei nur ein Wandler 4' dargestellt ist und darauf eine dünne Schicht und/oder die Verschleißschutzschicht, die dann die Oberfläche 9 des Sensors 2 bildet. Die damit erreichbare Richtcharakteristik weist eine Reihe von Vorteilen gegenüber einfachen Spulenanordnungen auf.

Die Anschlüsse der verschiedenen Ultraschallwandlerspulen 4, 4' und Wirbelstromspulen 5, 15, 25 zu den Strom/Spannungsversorgungsleitungen sind in Figur 1 der besseren Übersichtlichkeit halber nicht dargestellt.

In der Fig. 1 sind verschiedene mögliche Ausgestaltungen der Anordnung von Wirbelstromspulen zusammen eingezeichnet. Diese beeinflussen sich bei der Auswertung gegenseitig nicht und können daher zusammen oder auch einzeln realisiert werden.

Zum einen kann der gesamte Sensor 2 von einer umfassenden Wirbelstromspule 5 umgeben werden. Die in Figur 1 dargestellte äußere Umrandung um die Spule 5 kann ein Gehäuse sein oder eine Vergußmasse. Die oberste Wicklung der Wirbelstromspule 5 liegt dann in oder in der Nähe der Ebene der Wandler 4, 4', die weiteren Wicklungen liegen dann senkrecht zur Zeichenebene unter dieser Wicklung.

Bei einer anderen Ausgestaltung kann eine Reihe 3 von Schallwandlern 4, 4' von einer diese umfassenden Wirbelstromspule 15 umgeben sein, die dann zwischen dem Rand der Ausnehmung 6' und dem Permanentmagneten 7' zu liegen kommt, wie im rechten Teil von Figur 1 dargestellt. Dabei können natürlich auch beide Reihen 3 und 3' von solchen Wirbelstromspulen 15 umwickelt sein. Es ist weiter möglich, einen oder mehrere einzelne Ultraschallwandler 4 mit jeweils einer Einzel-Wirbelstromspule 25 zu umgeben. Auch bei diesen Spulen 15, 25 liegt nur die oberste Wicklung etwa in der Ebene der Ultraschallwandler 4 bzw. 4' und die restlichen Wicklungen darunter. Im rechten Teil von Figur 1 ist eine Spule 25' und um die Reihe 3' die Spule 15' dargestellt.

Die Fig. 2 zeigt zwei Impedanz-Ortskurven eines festfrequenten Wirbelstromsignals bei Änderung der Abhebung für unterschiedliche Materialzustände. Das Koordinatensystem ist schematisch mit seinen beiden Achsen des komplexen Impedanzanteils 75 und dem Widerstand 76 eingezeichnet. Für die Kalibrierung wird die Kurve 80 aus den Meßwerten der Impedanz bei aufgesetztem Sensor bei unterschiedlichen Materialzuständen aufgezeichnet. Dabei entspricht der Punkt 81 z.B. einem Material mit einem kleinen Ferritgehalt. Mit den Kurven 82 und 83 sind zwei Abhebekurven für zwei unterschiedliche Materialzustände wiedergegeben, für die sich ein Impedanzwert 84 bei einem als "abgehoben" zu bezeichnenden Abstand der Spule von der Werkstoffoberfläche angeben läßt. Dieser entspricht in der Theorie dem Abstand unendlich. Die Kurve 85 zeigt die Impedanz bei einem vorgegebenen Abstand der Spule von der Werkstoffoberfläche bei verschiedenen Materialzuständen an.

Wegen des vom Materialzustand abhängigen Verlaufs der Abhebekurven sind für die zu prüfenden Materialien entsprechende Kalibrierkurven für die Abhebung zu erstellen.

Die gemessenen Impedanzwerte an einem Material unbekannten Zustandes und bei nicht bekanntem Abstand der Spule zum Material werden durch Interpolation mit den Werten der Kalibrierkurven bzgl. Werkstoffzustand und Abstand der Spule zur Werkstoffoberfläche ausgewertet.

Die Fig. 3a zeigt eine schematische Darstellung eines Ultraschall-Sensors 2 zusammen mit der Sende- und Empfangselektronik für die einzelnen Sensorelemente. Ein Ultraschallsendegenerator 20 ist mit der mäanderförmig verlegten Wicklung 14 eines Sende-Ultraschallwandlers 4 verbunden.

Diese Wicklung 14 liegt entsprechend der schematischen Seitenansicht 3b unterhalb der Sensoroberfläche 9. In einem räumlichen Abstand hierzu ist bei diesem Ausführungsbeispiel eine weitere Wicklung 14' eines getrennten Empfangs-Ultraschallwandlers 4' angeordnet, die mit einer Ultraschall-Empfangselektronik 21 verbunden ist.

Um beide Ultraschallwandler 4, 4' herum ist jeweils eine Wirbelstromspule 15, 15' angeordnet, deren Wicklungsdraht 16, 16' senkrecht zur Ebene wie die Hochfrequenzspulen der Ultraschallwandler 4, 4' liegen; nur die oberste Wicklung 16, 16' der Wirbelstromspule liegt unterhalb der Sensoroberfläche 9 und damit etwa in der Ebene der Wandler 4, 4', wie in Figur 3a dargestellt. Diese Wirbelstromspulen 15, 15' sind jeweils mit einer Wirbelstromschaltung 22 verbunden, mit der die beiden Spulen jeweils als Sende- bzw. als Empfangsspulen schaltbar sind.

In Figur 3b ist im rechten Teil zusätzlich der Permanentmagnet 7' eingezeichnet, um den die Wirbelstromspule 15' mit den Wicklungen 16' gewickelt ist und die Ausnehmung 6', in der der Ultraschallwandler 4' mit seinen Wicklungen 14' und darüber der Permanentmagnet 7' zu liegen kommen und zwischen dem Permanentmagnet 7' und der Wandung 8' der Ausnehmung 6' die Wirbelstromspule 15' mit den Wicklungen 16'. Die Zwischenräume in der Ausnehmung 6' werden dann vergossen, so daß beide Spulen und Permanentmagnet in der Ausnehmung 6' des Sensors 2 fest angeordnet sind. Die dünne Schicht 9' zwischen Ultraschallwandler 4' bzw. unterster Wicklung 16' und der Oberfläche 9 des Sensors kann aus dem Körper des Sensors 2 gebildet sein und auf diese Oberfläche 9 kommt dann eine Verschleißschutzschicht (nicht dargestellt). Die Schicht 9' kann auch, wie in der DE C1 42 04 643 beschrieben, selbst aus der Verschleißschutzschicht bestehen.

Alle drei Schaltungen 20, 21 und 22 sind über eine gemeinsame Steuereinheit 23 ansteuerbar, die vorzugsweise durch einen Rechner realisiert ist.

Bei üblichen Ultraschallsensoren wird in einem Takt von z.B. 300 Hz ein von dem Ultraschallsendegenerator 20 über den Sende-Ultraschallwandler 4 erzeugtes Ultraschallsignal in die Probenoberfläche eingestrahlt und ein Antwortsignal nach einer durch den Prüfling vorgegebenen Verzögerung durch die Empfangs-Ultraschallwandler 4' aufgenommen, das dann in der Ultraschall-Empfangselektronik 21 ausgewertet wird. Nach Abklingen der einlaufenden Ultraschallsignale kann dann der Wirbelstromimpuls mit einer vorgegebenen Frequenz und fester Stomstärke von der Wirbelstromsteuerschaltung 22 abgegeben werden, der über die Wirbelstromspulen in die Oberfläche des Prüflings geleitet und dessen Antwortimpuls von der Wirbelstromsteuerschaltung 22 aufgenommen wird. Vorteilhafterweise wird die Wechselstromeinspeisung und die Wirbelstrommessung zeitlich nah vor dem Sendeimpuls des Ultraschall durchaeführt.

Aus dem empfangenen Signal ist bei der vorgegebenen Frequenz des Wirbelstrompulses ein Punkt in dem Impedanzdiagramm der Probenoberfläche festgelegt. In dem Graphen des Impedanzdiagrammes ergeben sich mehrere unterschiedliche Kurven in Abhängigkeit von dem δ-Ferrit-Gehalt des geprüften Metalls. Bei dem zu prüfenden Werkstoff kann es sich um Austenit handeln, das z.B. einen 2-3 prozentigen δ-Ferrit Gehalt aufweist, der sich an Schweißnähten verändert und z.B. verdoppelt. Die damit verbundene Impedanzänderung würde bei den Vorrichtungen nach dem Stand der Technik zu der Vortäuschung einer Abhebung führen, so daß gerade zu prüfende Schweißnähte in ihrem Zustand nicht richtig beurteilt würden. Durch die hier vorgenommene Meßwertauswertung über Interpolation von Kalibrierwerten für Abhebung und Werkstoffzustand ist es aber mit einer einzigen Messung möglich, den Abstand der Spulen von der Prüflingsoberfläche absolut zu erfassen. Eine weitere genauere Bestimmung der Abhebung der Spule bei unterschiedlichen Werkstoffzuständen ist durch alternative Verwendung verschiedener fester Frequenzen für die Wirbelstrompulse möglich.

Die Steuereinheit 23 wertet wie beschrieben die Wirbelstrommessung bzgl. der Abhebung der Wirbelstromspulen 5, 15, und 25 aus. Aus den von den Wirbelstromspulen gemessenen lokalen Werten des Abstandes zu der Oberfläche und des Werkstoffzustandes werden Amplituden- und Phasenänderungen der gesendeten und empfangenen Ultraschallwelle kompensiert.

Es ist auch möglich, die Sende- bzw. die Empfangsspule als Ultraschallwandler selber oder segmentierte Abschnitte von diesen als Wirbelstromspulen zu verwenden. Dann wird in Meßpausen des Ultraschallwandlers 4 die Verbindung der Spulen oder eines Spulensegmentes des Ultraschallwandlers 4 bzw. 4' zu den Steuerelektroniken 20 bzw. 21 unterbrochen und auf die Wirbelstromsteuerschaltung 22 umgeschaltet.

## Patentansprüche

1. Vorrichtung zur Erfassung der Prüfkopfabhebung bei der zerstörungsfreien Untersuchung von metallischen Werkstoffen mit Hilfe eines koppelmittelfreien elektromagnetischen Ultraschallsensors (2) mit mindestens einem elektromagnetischen Ultraschallwandler (4, 4'), mit dem oder mit denen eine Ultraschallwelle ohne Koppelmittel erzeugbar und empfangbar ist,
**dadurch gekennzeichnet,**
**dass** mindestens eine Wirbelstromspule (5; 15; 25) mit einer Spulenachse senkrecht zur Ebene des elektromagnetischen Ultraschallwandlers (4, 4') angeordnet ist, welche Ebene parallel zu einer zum zu prüfenden Werkstoff gerichteten Unterseite des Ultraschallsensors (2) liegt, wobei die Wirbelstromspule (5; 15; 25) in Messpausen des Ultraschallwandlers (4, 4') mit einer Sende- und Empfangsschaltung (22) für die Wirbelstromspule (5; 15; 25) zur Erfassung der komplexen Impedanz der Wirbelstromspule (5; 15; 25) und zur Separation von Abhebe- und Materialeinfluss durch Auswertung von Betrag und Phasenlage der komplexen Impedanz verbunden ist.

2. Vorrichtung nach Anspruch 1,
**dadurch gekennzeichnet,**
**dass** mindestens ein Ultraschallwandler (4, 4') oder eine Gruppe (3, 3') von Ultraschallwandlern (4, 4') mit einer Wirbelstromspule (25 bzw. 15) umgeben ist, oder der ganze Sensor (2) von einer Wirbelstromspule (5).

3. Vorrichtung nach Anspruch 1 oder 2,
**dadurch gekennzeichnet,**
**dass** mindestens eine der Wicklungen (16, 16') der Wirbelstromspule (5, 15, 25) etwa in der Ebene des Ultraschallwandlers (4, 4') liegt.

4. Vorrichtung nach Anspruch 1,
**dadurch gekennzeichnet,**
**dass** eine Spule oder ein segmentierter Abschnitt einer Spule des Ultraschallwandlers (4 oder 4') in der besagten Messpause als Wirbelstromspule (5) mit der Sende- und Empfangsschaltung (22) verbunden ist.

5. Verfahren zur Erfassung der Prüfkopfabhebung bei der zerstörungsfreien Untersuchung von metallischen Werkstoffen mit elektromagnetischen Ultraschallwandlern (4, 4'), bei dem Ultraschall mit Hilfe von mindestens einem elektromagnetischen Ultraschallwandler in den Werkstoff eingestrahlt wird und mit Hilfe von mindestens einem elektromagnetischen Ultraschallwandler ein Ultraschallecho aufgenommen wird,
dadurch gekennzeichet,
dass in Messpausen der elektromagnetischen Ultraschallwandler mit einer Wirbelstromspule ein Wirbelstromsignal in den metallischen Werkstoff eingespeist und empfangen wird, wobei durch Auswertung von Betrag und Phasenlage des Wirbelstromsignals eine Separation von Abhebe- und Materialeinfluss durchgeführt und mit Hilfe von Kalibrier-Impedanz-Ortskurven der Werkstoffzustand und der Abstand der Spule von der Werkstoffoberfläche ermittelt wird.

6. Verfahren nach Anspruch 5,
**dadurch gekennzeichnet,**
**dass** Amplituden- und Phasenänderungen der gesendeten und empfangenen Ultraschallwelle mit Hilfe des gemessenen Werkstoffzustandes und des Abstandes der Spule von der Werkstoffoberfläche kompensiert werden.

## Claims

1. A device for detecting lifting of a probe during nondestructive testing of metallic materials with the aid of a coupling-medium-free electromagnetic ultrasonic sensor (2) having at least one electromagnetic ultrasonic transducer (4,4'), with which an ultrasound wave is generatable and receivable without coupling media,
wherein
at least one eddy current coil (5; 15; 25) is disposed with one coil axis perpendicular to the plane of the electromagnetic ultrasonic transducer (4, 4'), said plane lying parallel to a bottom side of said ultrasonic sensor (2) directed to a to-be-tested material, with said eddy current coil (5;,15; 25) being connected, during measurement pauses of said ultrasonic transducer (4,4'), to a transmission circuit and reception circuit (22) for said eddy current coil (5; 15; 25) to detect the complex impedance of said eddy current coil (5; 15; 25) and to separate the lift influence and the material influence by evaluating the value and the phase position of said complex impedance.

2. A device according to claim 1,
wherein
at least one ultrasonic transducer (4, 4') or a group (3, 3') of said ultrasonic transducers (4,4') is surrounded by an eddy current coil (25 respectively 15) or said entire sensor (2) is surrounded by an eddy current coil (5).

3. A device according to claim 1 or 2,
wherein
at least one of the windings (16, 16') of said eddy current coils (5, 15, 25) lies approximately in the plane of said ultrasonic transducer (4, 4').

4. A device according to claim 1,
wherein
a coil or a segmented section of a coil of said ultrasonic transducer (4 or 4') is connected in said measuring pause as said eddy current coil (5) to said transmission circuit and reception circuit (22).

5. A method for detecting lifting of a probe during nondestructive testing of metallic materials using electromagnetic ultrasonic transducers (4, 4'), in which ultrasound is transmitted into said material with the aid of at least one said electromagnetic ultrasonic transducer and an ultrasonic echo is received with the aid of at least one said electromagnetic transducer,
wherein
in the measuring pauses of said electromagnetic ultrasonic transducers, with one eddy current coil an eddy current signal is fed into said metallic material and received, with separation of said influence of the lifting and said influence of the material being carried out by evaluating the value and the phase position of the eddy current signal and the state of the material and the distance between the coil and the surface of the material being determined with said calibrating impedance locus curves.

6. A method according to claim 5,
wherein
changes in the amplitude and in the phase of the transmitted and received ultrasonic wave are compensated with the aid of the measured state of the material and of the measured distance between the coil and the surface of the material.

## Revendications

1. Dispositif pour déterminer le soulèvement d'une tête de mesure lors du contrôle non destructif de matières métalliques à l'aide d'un capteur ultrasonore électromagnétique (2) sans moyen de couplage, comportant au moins un transducteur ultrasonore électromagnétique (4, 4'), grâce auquel ou grâce auxquels une onde ultrasonore peut être engendrée et reçue sans moyen de couplage,
**caractérisé en ce qu'**au moins une bobine à courants parasites (5 ; 15 ; 25) est agencée avec un axe de bobine perpendiculairement au plan du transducteur ultrasonore électromagnétique (4, 4'), lequel plan est parallèle à un dessous, orienté vers la matière à tester, du capteur ultrasonore (2), la bobine à courants parasites (5 ; 15 ; 25), dans des pauses de mesure du transducteur ultrasonore (4, 4'), étant reliée à un circuit d'émission et de réception (22) pour la bobine à courants parasites (5 ; 15 ; 25) pour déterminer l'impédance complexe de la bobine à courants parasites (5 ; 15 ; 25) et pour séparer l'influence du soulèvement et l'influence de la matière par évaluation de la valeur et de la relation des phases de l'impédance complexe.

2. Dispositif selon la revendication 1,
**caractérisé en ce qu'**au moins un transducteur ultrasonore (4, 4') ou un groupe (3, 3') de transducteurs ultrasonores (4, 4') est enveloppé par une bobine à courants parasites (25, 15), ou tout le capteur (2) par une bobine à courants parasites (5).

3. Dispositif selon la revendication 1 ou 2,
**caractérisé en ce qu'**au moins un des enroulements (16, 16') de la bobine à courants parasites (5 ; 15 ; 25) se trouve sensiblement dans le plan du transducteur ultrasonore (4, 4').

4. Dispositif selon la revendication 1,
**caractérisé en ce qu'**une bobine ou un tronçon segmenté d'une bobine du transducteur ultrasonore (4 ou 4'), dans ladite pause de mesure, est relié, comme bobine à courants parasites (5), au circuit d'émission et de réception (22).

5. Procédé pour déterminer le soulèvement d'une tête de mesure lors du contrôle non destructif de pièces métalliques par des transducteurs ultrasonores électromagnétiques (4, 4'), dans lequel les ultrasons sont émis dans la matière à l'aide d'au moins un transducteur ultrasonore électromagnétique et un écho ultrasonore est reçu à l'aide d'au moins un transducteur ultrasonore électromagnétique,
**caractérisé en ce que**, dans les pauses de mesure des transducteurs ultrasonores électromagnétiques, par une bobine à courants parasites, un signal à courants parasites est alimenté et reçu dans la matière métallique, une séparation de l'influence du soulèvement et de l'influence de la matière étant effectuées par évaluation de la valeur et de la relation des phases du signal à courants parasites et, à l'aide de courbes calibre/impédance, l'état de la matière et la distance de la bobine de la surface de la matière sont déterminés.

6. Procédé selon la revendication 5,
**caractérisé en ce que** des modifications d'amplitude et de phase de l'onde ultrasonore émise et reçue sont compensées à l'aide de l'état de la matière mesuré et de la distance de la bobine de la surface de la matière.
